# FASCICULE DE BREVET EUROPEEN

(11) **EP 2 520 777 B1**
(45) Date de publication et mention de la délivrance du brevet: **03.12.2014**
(21) Numéro de dépôt: 12165085.7
(22) Date de dépôt: 23.04.2012
(51) Int. Cl.: F01N 3/20, B01D 53/94, F01N 3/023, F01N 3/035

(54) **Méthode d'épuration chimique de gaz d'échappement issus d'un moteur thermique équipant un véhicule automobile**
Verfahren zur chemischen Reinigung von Abgasen aus einem Verbrennungsmotor in einem Kraftfahrzeug
Method for chemical purification of exhaust gas from an engine fitted on a motor vehicle

(30) Priorité: 02.05.2011 FR 1153724
(43) Date de publication de la demande: 07.11.2012
(73) Titulaire: PEUGEOT CITROËN AUTOMOBILES SA, 78140 Velizy-Villacoublay (FR)
(72) Inventeur: Grise, Clement, 92270 BOIS COLOMBES (FR); Artault, Mathieu, 92700 COLOMBES (FR); Barre Pain, Mireille, 77500 CHELLES (FR)

(56) Documents cités:
- WO-A2-2008/077626
- US-A1- 2008 295 482
- JOHANNESSEN T ET AL: "Ammonia Storage and Delivery Systems for Automotive NOx Aftertreatment", SAE TECHNICAL PAPER SERIES, SOCIETY OF AUTOMOTIVE ENGINEERS, WARRENDALE, PA, US, vol. SP-2154, no. 2008-01-1027, 14 avril 2008 (2008-04-14), pages 1-8, XP002515826, ISSN: 0148-7191

## Description

L'invention relève du domaine des méthodes d'épuration chimique de gaz d'échappement issus d'un moteur thermique équipant un véhicule automobile. Elle a pour objet une telle méthode. Elle a aussi pour objet un dispositif d'injection pour la mise en oeuvre d'une telle méthode.

Le document WO 2008/077626 (AMMINEX A/S) décrit une ligne d'échappement d'un moteur thermique équipant un véhicule automobile. La ligne d'échappement est destinée à évacuer des gaz d'échappement depuis le moteur thermique vers un environnement extérieur au véhicule automobile. La ligne d'échappement est en communication avec deux réservoirs contenant de l'ammoniac qui est destiné à être injecté à l'intérieur de la ligne d'échappement pour réduire des oxydes d'azote constitutifs des gaz d'échappement.

Un réservoir principal d'ammoniac est en relation avec la ligne d'échappement par l'intermédiaire d'un canal d'admission tandis qu'un réservoir secondaire d'ammoniac est en relation avec le canal d'admission par l'intermédiaire d'une conduite secondaire. Le canal d'admission est équipé d'un capteur de pression pour déterminer une pression d'ammoniac à l'intérieur du canal d'admission. Le canal d'admission est également équipé d'une vanne d'admission qui est interposée sur le canal d'admission entre le capteur de pression et un point de jonction entre le canal d'admission et la ligne d'échappement. La vanne d'admission est apte à interdire ou autoriser une circulation d'ammoniac à l'intérieur du canal d'admission. Le canal secondaire est équipé d'une vanne secondaire qui est à même d'interdire ou d'autoriser une circulation d'ammoniac à l'intérieur du canal secondaire.

Le capteur de pression mesure une information de pression qui est transmise à un contrôleur. Le contrôleur est apte à commander une ouverture ou une fermeture de la vanne d'admission et/ou de la vanne secondaire. Le contrôleur est également apte à commander la mise en oeuvre de moyens de chauffage du réservoir principal et/ou du réservoir secondaire pour faciliter une désorption d'ammoniac à l'intérieur du réservoir principal et/ou du réservoir secondaire. Les réservoirs contiennent un sel de stockage du type Sr(NH₃)₈Cl₂ ou Ca(NH₃)₈Cl₂ qui est apte à adsorber ou désorber l'ammoniac. Une telle faculté est fonction de la pression et de la température régnant à l'intérieur du réservoir.

Un problème général posé dans le domaine réside en une nécessité d'avoir un réservoir secondaire le plus chargé possible en ammoniac de telle sorte que le réservoir secondaire soit à même de fournir de l'ammoniac le plus rapidement possible.

Le but de la présente invention est de proposer une méthode d'épuration chimique de gaz d'échappement circulant à l'intérieur d'une ligne d'échappement équipant un moteur thermique d'un véhicule automobile, la ligne d'échappement étant équipé d'un dispositif d'injection d'ammoniac à l'intérieur de la ligne d'échappement, le dispositif d'injection comprenant au moins une cartouche de démarrage et au moins une cartouche principale, la méthode permettant de disposer d'une cartouche de démarrage la plus chargée possible en ammoniac de telle sorte que la cartouche de démarrage soit à même de fournir de l'ammoniac le plus rapidement possible.

Une méthode de la présente invention est une méthode d'épuration chimique de gaz d'échappement circulant à l'intérieur d'une ligne d'échappement équipant un moteur thermique d'un véhicule automobile. La ligne d'échappement est équipée d'un filtre à particules et d'un dispositif d'injection d'ammoniac à l'intérieur de la ligne d'échappement. Le dispositif d'injection comprend au moins une cartouche de démarrage et au moins une cartouche principale. La méthode d'épuration comprend une étape de régulation de la cartouche principale qui comporte un accroissement d'une pression à l'intérieur de la cartouche principale jusqu'à une pression de régulation.

Selon la présente invention, la mise en oeuvre de l'étape de régulation est placée sous la dépendance (prend en compte) d'une instruction de régénération du filtre à particules.

L'étape de régulation est avantageusement placée sous la dépendance d'une estimation d'une charge restante d'ammoniac à l'intérieur de la cartouche de démarrage.

L'étape de régulation de la cartouche principale est notamment mise en oeuvre si l'instruction de régénération du filtre à particules est valide et l'estimation d'une charge restante d'ammoniac à l'intérieur de la cartouche de démarrage est supérieure à une estimation-seuil.

L'étape de régulation de la cartouche principale est notamment mise en oeuvre si l'instruction de régénération du filtre à particules est invalide et l'estimation d'une charge restante d'ammoniac à l'intérieur de la cartouche de démarrage est inférieure à une estimation-seuil.

L'étape de régulation de la cartouche principale est préférentiellement mise en oeuvre tant que l'estimation d'une charge restante d'ammoniac à l'intérieur de la cartouche de démarrage est inférieure à l'estimation-seuil.

L'étape de régulation de la cartouche principale est suivie d'une étape de mise en pression principale de la cartouche principale qui est portée à une pression-seuil inférieure à la pression de régulation.

Un dispositif d'injection d'ammoniac à l'intérieur de la ligne d'échappement pour la mise en oeuvre d'une telle méthode est principalement reconnaissable en ce que le dispositif d'injection comprend un contrôleur comportant des moyens pour prendre en compte une validité de l'instruction de régénération du filtre à particules.

Le contrôleur comporte avantageusement des moyens pour prendre en compte l'estimation d'une charge restante d'ammoniac à l'intérieur de la cartouche de démarrage.

Le contrôleur comporte avantageusement des moyens pour commander une mise en oeuvre de moyens respectifs de mise sous pression de la cartouche de démarrage et de la cartouche principale.

Le contrôleur comporte des moyens pour commander une mise en oeuvre de vannes affectées respectivement à la cartouche de démarrage et à la cartouche principale.

D'autres caractéristiques et avantages de la présente invention apparaîtront à la lecture de la description qui va en être faite d'exemples de réalisation, en relation avec les figures des planches annexées, dans lesquelles :
- La figure 1 est une vue schématique d'un dispositif d'injection d'ammoniac à l'intérieur d'une ligne d'échappement d'un moteur thermique selon la présente invention.
- La figure 2 illustre en fonction du temps une pression à l'intérieur d'une cartouche principale constitutive du dispositif d'injection illustré sur la figure précédente.
- La figure 3 est un schéma logique représentant une méthode de la présente invention comprenant une pluralité d'étapes successives.
- La figure 4 illustre en fonction du temps une pression à l'intérieur de la cartouche de démarrage, la pression à l'intérieur de la cartouche principale, une masse d'ammoniac rechargé à l'intérieur de la cartouche de démarrage et un débit de rechargement d'ammoniac à l'intérieur de la cartouche de démarrage consécutivement à un démarrage du moteur thermique du véhicule automobile.
- La figure 5 illustre en fonction du temps la masse d'ammoniac rechargé à l'intérieur de la cartouche de démarrage selon deux pressions distinctes appliquées à la cartouche de démarrage.
- La figure 6 illustre en fonction du temps une pression à l'intérieur de la cartouche de démarrage, la pression à l'intérieur de la cartouche principale, une masse d'ammoniac rechargé à l'intérieur de la cartouche de démarrage et un débit de rechargement d'ammoniac à l'intérieur de la cartouche de démarrage consécutivement à un arrêt du moteur thermique du véhicule automobile,

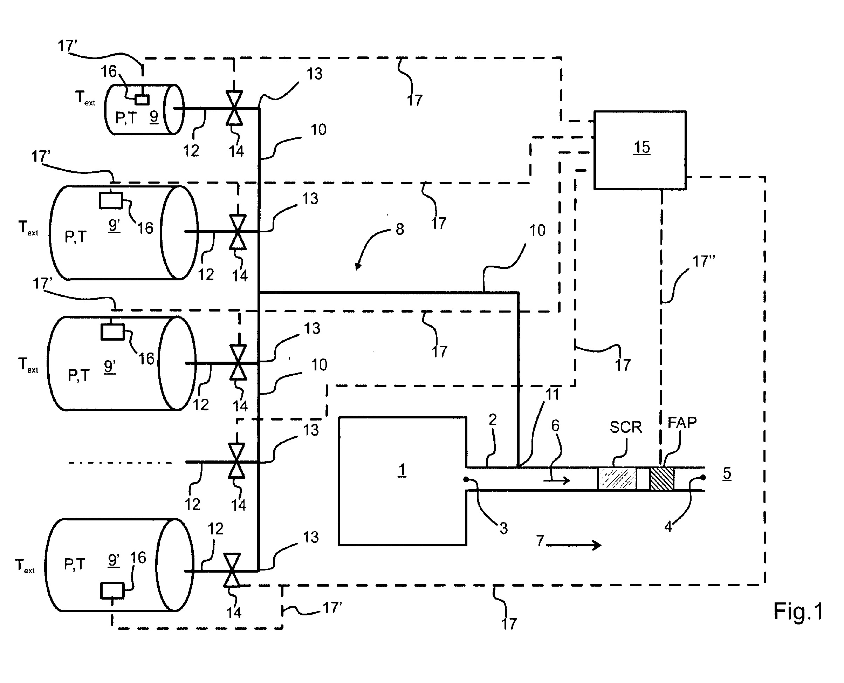

Sur la figure 1, un moteur thermique 1 d'un véhicule automobile est pourvu d'une ligne d'échappement 2. Cette dernière comporte une extrémité amont 3 qui est en relation avec le moteur thermique 1 et une extrémité aval 4 qui débouche vers un environnement extérieur 5 au véhicule automobile. La ligne d'échappement 2 est destinée à canaliser la circulation de gaz d'échappement 6 depuis le moteur thermique 1 vers l'environnement extérieur 5. Les gaz d'échappement 6 sont susceptibles de contenir des oxydes d'azote NOₓ, x étant égal à un et/ou à deux, qu'il est préférable de ne pas rejeter vers l'environnement extérieur 5. Pour ce faire, la ligne d'échappement 2 loge un catalyseur de réduction SCR qui est apte à réduire les oxydes d'azote NOₓ en azote et en eau. Une telle réduction est réalisée à l'intérieur du catalyseur de réduction SCR à partir d'une introduction d'ammoniac gazeux à l'intérieur de la ligne d'échappement 2, en amont du catalyseur de réduction SCR selon un sens d'écoulement 7 des gaz d'échappement 6 à l'intérieur de la ligne d'échappement 2. A cet effet, la ligne d'échappement 2 est équipée d'un dispositif d'injection 8 d'ammoniac gazeux à l'intérieur de la ligne d'échappement 2.

Le dispositif d'injection 8 comprend une pluralité de cartouches 9,9' de stockage d'ammoniac. Chaque cartouche 9,9' contient un sel de stockage d'ammoniac du type Sr(NH₃)₈Cl₂, Ca(NH₃)₈Cl₂, Mg(NH₃)₈Cl₂ ou analogue. Le sel est apte à libérer par désorption et/ou retenir par adsorption de l'ammoniac. De telles réactions de désorption et d'adsorption dépendent d'une pression P et d'une température T régnant à l'intérieur de chaque cartouche 9,9'. La réaction de désorption de l'ammoniac est une réaction endothermique tandis que la réaction d'adsorption est une réaction exothermique.

Le dispositif d'injection 8 comprend une ligne d'alimentation principale 10 qui débouche à l'intérieur de la ligne d'échappement 2 en un point d'injection 11 qui est ménagé sur la ligne d'échappement 2 en amont du catalyseur de réduction SCR selon le sens d'écoulement 7 des gaz d'échappement 6 à l'intérieur de la ligne d'échappement 2.

Le dispositif d'injection 8 comprend également autant de conduites d'alimentation 12 que de cartouches 9,9', chaque conduite d'alimentation 12 étant interposée entre la cartouche 9,9' à laquelle elle est affectée et un point de dérivation respectif 13 de la ligne d'alimentation principale 10. Autrement dit, les cartouches 9,9' sont montées en dérivation les unes par rapport aux autres.

Chaque conduite d'alimentation 12 est équipée d'une vanne respective 14 qui est apte à autoriser ou interdire une circulation d'ammoniac à l'intérieur de la conduite d'alimentation 12. Une mise en position d'ouverture et/ou de fermeture des vannes 14 est commandée par un contrôleur 15 auquel les vannes 14 sont reliées par l'intermédiaire de moyens de communication 17 représentés en traits pointillés sur la figure 1.

Chaque cartouche 9,9' est pourvue d'un moyen de mise en pression d'ammoniac 16 dont la mise en oeuvre est également placée sous la dépendance du contrôleur 15 par l'intermédiaire de moyens de transmission 17', qui sont également représentés en traits pointillés sur la figure 1. Le moyen de mise en pression d'ammoniac 16 est préférentiellement constitué d'un moyen de chauffage de la cartouche 9,9'. Le moyen de mise en pression d'ammoniac 16 est par exemple constitué d'une résistance électrique ou analogue. La réaction de désorption d'ammoniac étant endothermique, un chauffage de la cartouche 9,9' accélère une désorption d'ammoniac et consécutivement augmente la pression P à l'intérieur de la cartouche 9,9'. Le moyen de mise en pression d'ammoniac 16 est destiné à augmenter la pression P à l'intérieur de la cartouche 9,9' à laquelle il est affecté de telle sorte que la pression P régnant à l'intérieur de la cartouche 9,9' soit supérieure ou égale à une pression-seuil Pₛₑᵤᵢₗ. La pression-seuil Pₛₑᵤᵢₗ correspond à une pression à laquelle il est souhaité d'injecter l'ammoniac à l'intérieur de la ligne d'échappement 2.

Les cartouches 9,9' comprennent une cartouche de démarrage 9 qui est plus particulièrement mise en oeuvre lors d'un démarrage du véhicule automobile et au moins une cartouche principale 9' qui est mise en oeuvre lors d'une phase de roulage du véhicule automobile et/ou qui est mise en oeuvre pour recharger en ammoniac la cartouche de démarrage 9. Préférentiellement, les cartouches principales 9' sont en pluralité. La cartouche de démarrage 9 est notamment de dimensions inférieures à celles de la cartouche principale 9' de telle sorte que la cartouche de démarrage 9 est plus rapidement mise en pression à la pression-seuil Pₛₑᵤᵢₗ par le moyen de mise en pression d'ammoniac 16 que la cartouche principale 9'. Il en résulte une disponibilité d'ammoniac qui est plus rapide pour la cartouche de démarrage 9 que pour la cartouche principale 9'.

Par ailleurs, la ligne d'échappement 2 est équipée d'un filtre à particules FAP qui est par exemple disposé en aval du catalyseur de réduction SCR selon le sens d'écoulement 7 des gaz d'échappement 6 à l'intérieur de la ligne d'échappement 2. Le filtre à particules FAP est prévu pour retenir des suies constitutives des gaz d'échappement 6 préalablement à leur évacuation vers l'environnement extérieur 5. Le filtre à particules FAP est susceptible d'être régénéré pour améliorer l'efficacité de ce dernier. Une telle régénération consiste à brûler les suies, par exemple en injectant du carburant à l'intérieur de la ligne d'échappement 2. Une mise en oeuvre d'une telle régénération du filtre à particules FAP est placée sous la dépendance du contrôleur 15 par l'intermédiaire de moyens de commande 17", représentés en traits pointillés sur la figure 1.

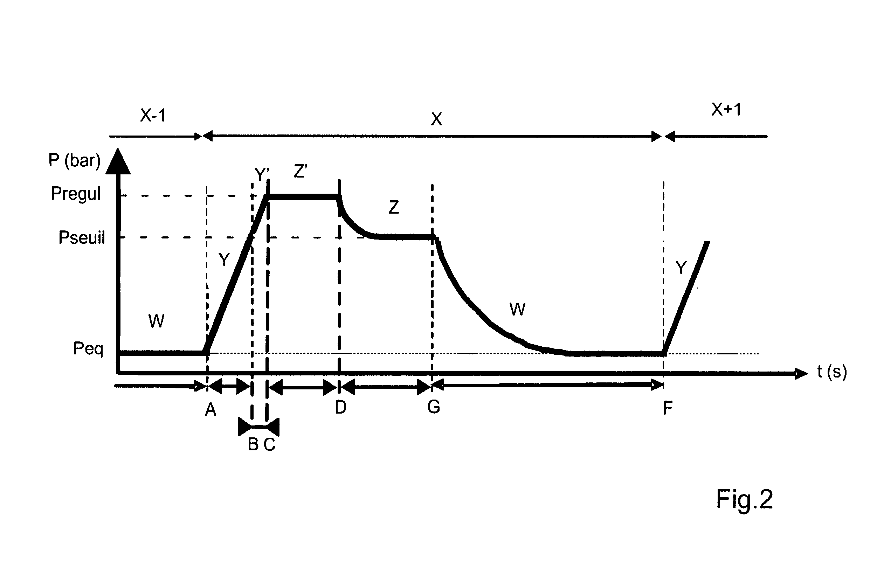

La figure 2 représente une évolution de la pression P à l'intérieur de la cartouche principale 9', ou d'une des cartouches principales 9', selon une modalité avantageuse de mise en oeuvre de la méthode de la présente invention. La mise en oeuvre de la cartouche principale 9' comporte une série de cycles de fonctionnement successifs X-1, X, X+1 qui comportent chacun successivement :
- une première étape de montée en pression Y de la cartouche principale 9' depuis une pression d'équilibre P_{eq} à la pression-seuil Pₛₑᵤᵢₗ,
- une deuxième étape de montée en pression Y' de la cartouche principale 9' depuis la pression-seuil Pₛₑᵤᵢₗ à une pression de régulation P_{regul},
- une étape de maintien en pression Z' à la pression de régulation P_{regul},
- une étape de maintien en pression Z à la pression-seuil Pₛₑᵤᵢₗ,
- une étape de descente en pression W depuis la pression-seuil Pₛₑᵤᵢₗ vers la pression d'équilibre P_{eq}.

La pression d'équilibre P_{eq} est la pression à laquelle est portée la cartouche principale 9' lorsque cette dernière est placée dans un environnement à une température extérieure Tₑₓₜ, sans aucune autre sollicitation, notamment sans mise en oeuvre du moyen de mise en pression d'ammoniac 16.

La première étape de montée en pression Y est comprise entre un temps de début de première montée A et un temps de fin de première montée B. Au cours de la première étape de montée en pression Y, le moyen de mise en pression d'ammoniac 16 est mis en oeuvre pour faire croître la pression P depuis la pression d'équilibre P_{eq} jusqu'à la pression-seuil Pₛₑᵤᵢₗ. Au temps de fin de première montée B, la présente méthode propose de vérifier si le filtre à particules FAP est en train d'être régénéré. Dans l'affirmative, le moyen de mise en pression d'ammoniac 16 continue à être mis en oeuvre. Il en découle une continuation de la montée en pression à l'intérieur de la cartouche principale 9'.

La deuxième étape de montée en pression Y' est comprise entre le temps de fin de première montée B et un temps de fin de deuxième montée C. Au cours de la deuxième étape de montée en pression Y', le moyen de mise en pression d'ammoniac 16 est mis en oeuvre pour faire croître la pression P depuis la pression-seuil Pₛₑᵤᵢₗ jusqu'à la pression de régulation P_{regul}, qui est supérieure à la pression-seuil Pₛₑᵤᵢₗ.

La première étape de maintien en pression Z' est comprise entre le temps de fin de deuxième montée C et un temps de fin de premier maintien D. Pendant la première étape de maintien en pression Z', la cartouche principale 9' est maintenue à la pression de régulation P_{regul}. Au temps de fin de premier maintien D, la cartouche de démarrage 9 est estimée suffisamment rechargée, de telle sorte que la cartouche principale 9' est, à partir de ce moment-là, maintenue à la pression-seuil Pₛₑᵤᵢₗ. Il en découle une chute de la pression P à l'intérieur de la cartouche principale 9' depuis la pression de régulation P_{regul} jusqu'à la pression-seuil Pₛₑᵤᵢₗ, une telle chute de pression se produisant au cours de la deuxième étape de maintien en pression Z.

La deuxième étape de maintien en pression Z est comprise entre le temps de fin de premier maintien D et un temps de fin de deuxième maintien G. Pendant la deuxième étape de maintien en pression Z, la cartouche principale 9' est maintenue à la pression-seuil Pₛₑᵤᵢₗ.

L'étape de descente en pression W est comprise entre le temps de fin de deuxième maintien G et un temps de fin de descente F. Le temps de fin de descente F du cycle de fonctionnement X correspond à un temps de début de montée du cycle de fonctionnement X+1. Autrement dit, la cartouche principale 9' reste à la pression d'équilibre P_{eq} tant qu'une mise en pression de la cartouche principale 9' n'est pas à nouveau provoquée.

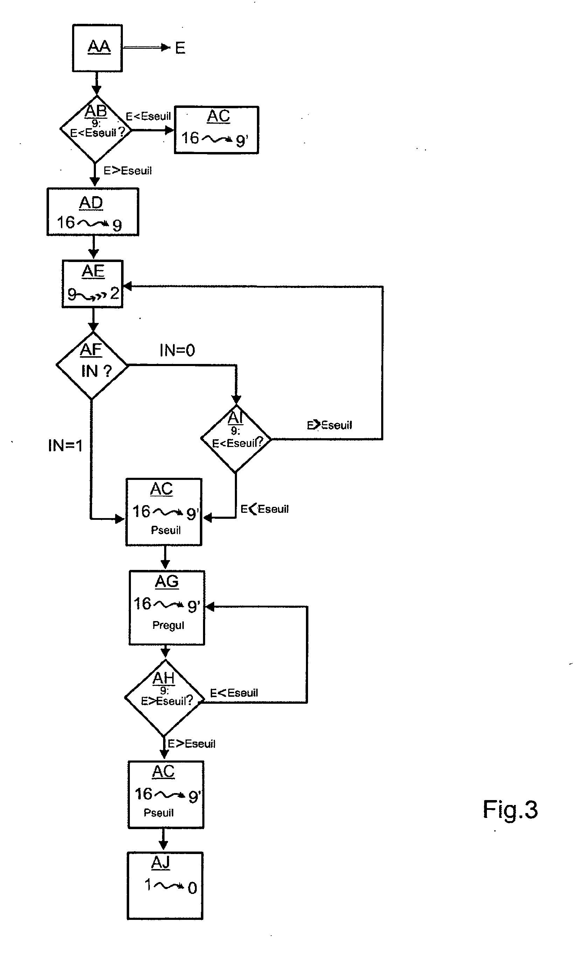

Sur la figure 3, une méthode d'épuration chimique des gaz d'échappement 6 issus du moteur thermique 1 est représentée par une série d'étapes successivement mises en oeuvre.

La méthode comprend une étape de démarrage AA du véhicule au cours de laquelle non seulement le moteur thermique 1 du véhicule automobile est mis en marche mais aussi une estimation E d'une charge restante d'ammoniac à l'intérieur de la cartouche de démarrage 9 est réalisée. L'estimation E de la charge restante en ammoniac à l'intérieur de la cartouche de démarrage 9 est par exemple calculée par itération à partir d'une quantité initiale connue d'ammoniac contenu à l'intérieur de la cartouche de démarrage 9 défalquée des consommations successives en ammoniac libérées par la cartouche de démarrage 9. L'estimation E de la charge restante en ammoniac à l'intérieur de la cartouche de démarrage 9 est par exemple encore calculée à partir d'une masse de la cartouche de démarrage 9.

La méthode comprend ensuite une première étape de vérification AB si la cartouche de démarrage 9 comporte une estimation E de charge en ammoniac restante qui est inférieure à une estimation-seuil Eₛₑᵤᵢₗ. L'estimation-seuil Eₛₑᵤᵢₗ est la valeur de la charge d'ammoniac en-deçà de laquelle il est souhaitable de recharger la cartouche de démarrage 9.

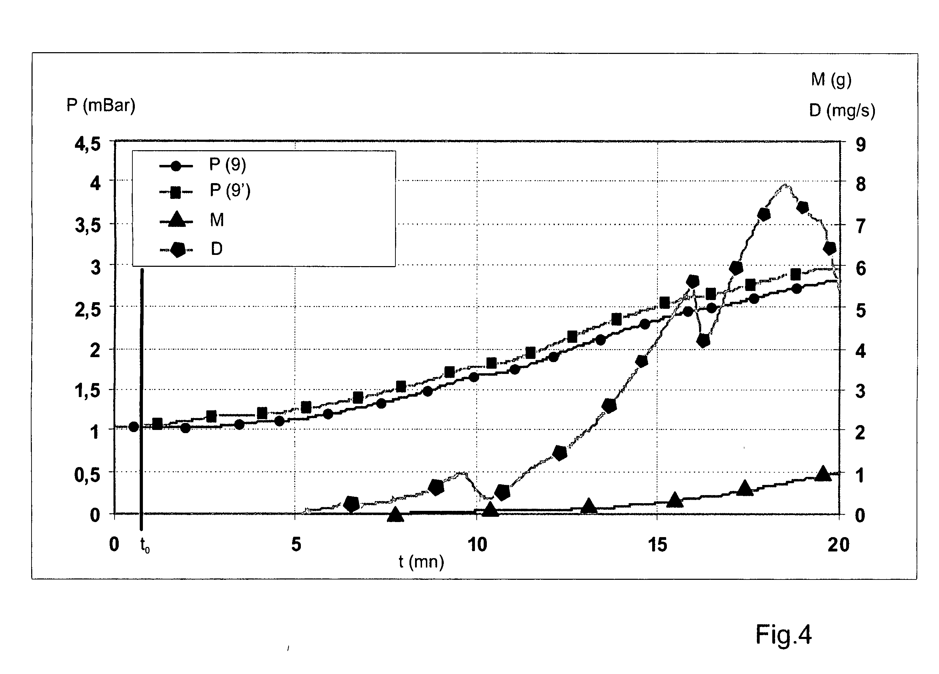

Si une réponse à la première étape de vérification AB est positive, la méthode comprend ensuite une étape de mise en pression principale AC de la cartouche principale 9'. Ces dispositions permettent un rechargement rapide de la cartouche de démarrage 9 à partir de la mise en pression de la cartouche principale 9'. Pour ce faire, les vannes 14 affectées à la cartouche de démarrage 9 et à la cartouche principale 9' considérée sont ouvertes, les vannes 14 affectées aux autres cartouches principales 9' restant fermées. Ceci permet un rechargement efficace de la cartouche de démarrage 9 en réduisant un nombre de mise en pression de la cartouche principale 9'. En se reportant sur la figure 4 qui représente, en fonction du temps t, la pression P à l'intérieur de la cartouche de démarrage 9, la pression P à l'intérieur de la cartouche principale 9', une masse M d'ammoniac rechargé à l'intérieur de la cartouche de démarrage 9 et un débit D de rechargement d'ammoniac consécutivement à un démarrage t₀ du moteur thermique 1 du véhicule automobile, il est remarquable que le rechargement de la cartouche de démarrage 9 débute dès que la pression P à l'intérieur de la cartouche principale 9' est supérieure à la pression P à l'intérieur de la cartouche de démarrage 9, y compris à froid. Autrement dit, l'augmentation de la pression P à l'intérieur de la cartouche principale 9' induit l'augmentation de la pression P à l'intérieur de la cartouche de démarrage 9, dès le démarrage t₀ du moteur thermique 1. Il en résulte un rechargement rapide de la cartouche de démarrage 9, à partir d'un débit D de rechargement d'ammoniac optimisé pour une masse M d'ammoniac rechargé à l'intérieur de la cartouche de démarrage 9 également optimisé. Un tel rechargement rapide permet de minimiser un nombre de fois où la cartouche principale 9 doit être mise en pression.

Si une réponse à la première étape de vérification AB est négative, la méthode comprend ensuite une étape de mise en pression secondaire AD de la cartouche de démarrage 9. La méthode comprend ensuite une étape d'injection d'ammoniac AE depuis la cartouche de démarrage 9 vers la ligne d'échappement 2 à partir d'une ouverture de la vanne 14 affectée à la cartouche de démarrage 9 et une fermeture de la vanne 14 affectée à la cartouche principale 9' et/ou des vannes 14 affectées aux cartouches principales 9'.

La méthode comprend ensuite une deuxième étape de vérification AF si une instruction de régénération IN du filtre à particules FAP est demandée. La deuxième étape de vérification AF est notamment mise en oeuvre en phase roulage du véhicule, c'est-à-dire après qu'un certain temps, par exemple de l'ordre de 15 minutes, se soit écoulé depuis le démarrage du véhicule automobile. En effet, lors d'une régénération du filtre à particules FAP, il est possible, voire souhaitable, de mettre en oeuvre des éléments, du type composants consommateurs d'énergie (déclenchement fonction dégivrage ou désembuage de la lunette arrière par exemple), du véhicule automobile, sans consommation additionnelle de carburant, et donc sans émission supplémentaire de dioxyde de carbone.

Si une réponse à la deuxième étape de vérification AF est positive, la méthode comprend ensuite l'étape de mise en pression principale AC de la cartouche principale 9'. En fin d'étape de mise en pression principale AC, la cartouche principale 9' est portée à la pression-seuil Pₛₑᵤᵢₗ.

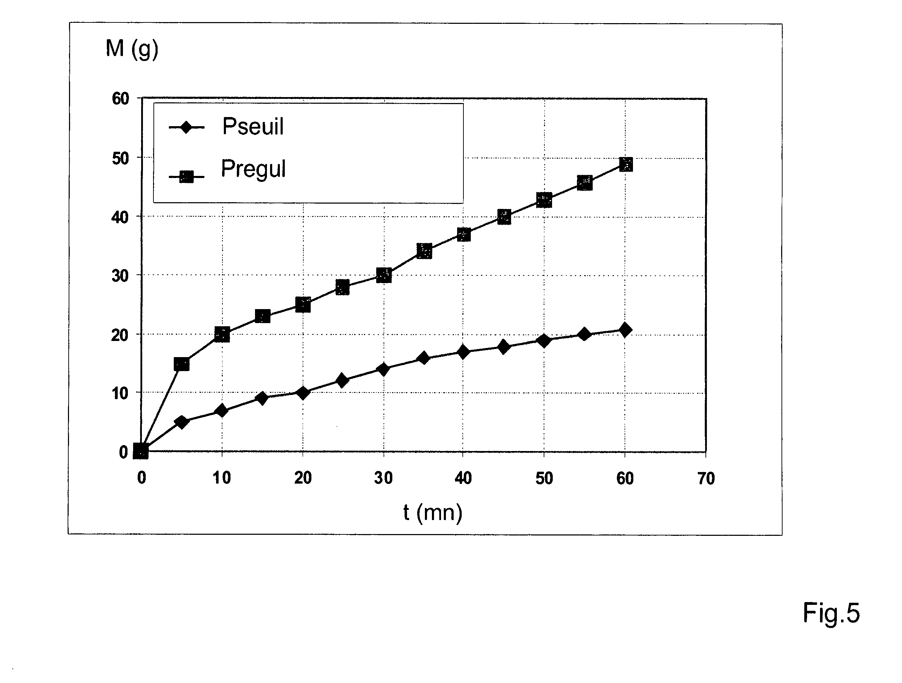

La méthode propose alors avantageusement une étape de régulation AG qui permet de porter la cartouche principale 9' à la pression de régulation P_{regul}, qui est supérieure à la pression-seuil Pₛₑᵤᵢₗ. Ces dispositions permettent une recharge plus rapide de la cartouche de démarrage 9. Ces dispositions permettent aussi de minimiser un nombre de mise en pression de la cartouche principale 9' pour recharger la cartouche de démarrage 9, à partir d'une mise en pression plus importante. Autrement dit, la présente invention propose avantageusement d'utiliser une phase de régénération du filtre à particules FAP pour accroitre une mise en pression de la cartouche principale 9' pour recharger plus rapidement et plus efficacement la cartouche de démarrage 9. En se reportant sur la fig.5, il est remarquable que la masse M d'ammoniac rechargée à l'intérieur de la cartouche de démarrage 9 pendant un même laps de temps est plus importante lorsque la cartouche de démarrage 9 est portée à la pression de régulation P_{regul} qu'à la pression-seuil Pₛₑᵤᵢₗ. De plus, un tel accroissement de pression est réalisé sans une consommation supplémentaire d'énergie électrique et sans provoquer d'émission supplémentaire de dioxyde de carbone.

La méthode comprend ensuite une troisième étape de vérification AH si l'estimation E de la charge en ammoniac de la cartouche de démarrage 9 est inférieure à l'estimation-seuil Eₛₑᵤᵢₗ.

Si une réponse à la troisième étape de vérification AH est négative, la méthode propose alors une continuation de l'étape de régulation AG qui permet de maintenir la cartouche principale 9' à la pression de régulation P_{regul}.

Si une réponse à la troisième étape de vérification AH est positive, la méthode comprend alors l'étape de mise en pression principale AC de la cartouche principale 9'. En fin d'étape de mise en pression principale AC, la cartouche principale 9' est portée à la pression-seuil Pₛₑᵤᵢₗ.

Si une réponse à la deuxième étape de vérification AF est négative, la méthode comprend alors une quatrième étape de vérification Al si l'estimation E de la charge en ammoniac de la cartouche de démarrage 9 est inférieure à l'estimation-seuil Eₛₑᵤᵢₗ.

Si une réponse à la quatrième étape de vérification Al est négative, la méthode propose alors l'étape d'injection d'ammoniac AE depuis la cartouche de démarrage 9 vers la ligne d'échappement 2 à partir d'une ouverture de la vanne 14 affectée à la cartouche de démarrage 9 et une fermeture de la vanne 14 affectée à la cartouche principale 9' et/ou des vannes 14 affectées aux cartouches principales 9'.

Si une réponse à la quatrième étape de vérification Al est positive, la méthode comprend alors l'étape de mise en pression principale AC de la cartouche principale 9'. En fin d'étape de mise en pression principale AC, la cartouche principale 9' est portée à la pression-seuil Pₛₑᵤᵢₗ.

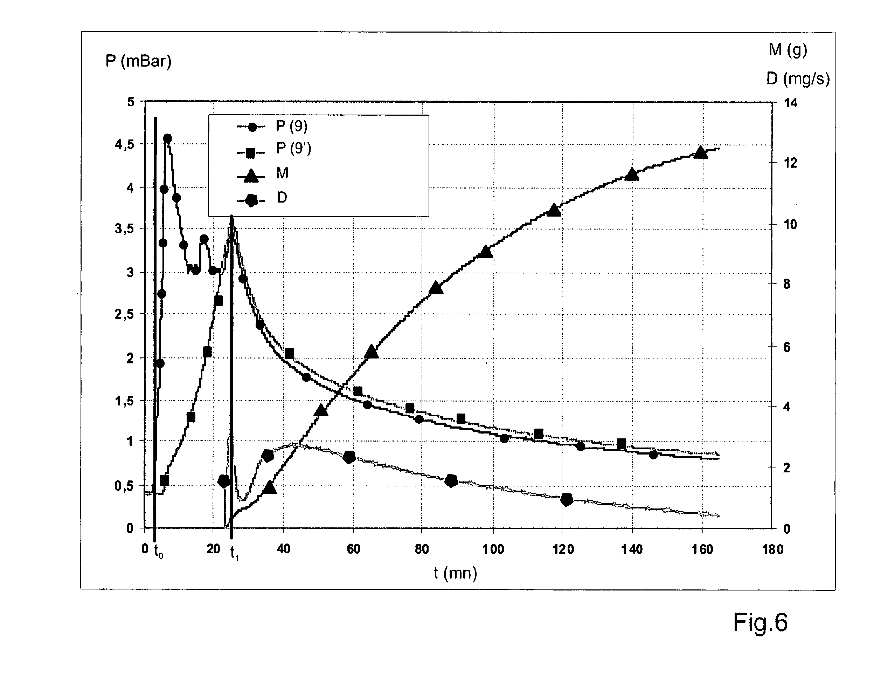

Enfin, lors d'une étape d'arrêt AJ du moteur thermique 1, la méthode propose, consécutivement à un arrêt t₁ du moteur thermique 1, une mise en pression de la cartouche principale 9' ayant un temps de refroidissement le plus long possible, de manière à permettre un rechargement passif de la cartouche de démarrage 9, tel qu'illustré sur la figure 6. Ces dispositions permettent encore de minimiser un nombre de mise en pression de la cartouche principale 9' pour recharger la cartouche de démarrage 9, à partir d'un rechargement passif de la cartouche de démarrage 9.

L'ensemble de ces dispositions permet de profiter d'une régénération du filtre à particules FAP pour porter la cartouche principale 9' à une pression de régulation P_{regul}, supérieure à la pression-seuil Pₛₑᵤᵢₗ habituelle, pour accélérer un rechargement en ammoniac de la cartouche de démarrage 9, en minimisant une occurrence de mise en pression de la cartouche principale 9', sans augmenter une consommation électrique du dispositif d'injection 8, sans accroître une consommation de carburant et sans augmenter une pollution de l'environnement extérieur 5 en dioxyde de carbone.

Un tel résultat est atteint à partir du dispositif d'injection 8 de la présente invention qui comporte :
- des moyens pour prendre en compte une validité de l'instruction de régénération IN du filtre à particules FAP,
- des moyens pour prendre en compte l'estimation E d'une charge restante d'ammoniac à l'intérieur de la cartouche de démarrage 9,
- des moyens pour commander une mise en oeuvre des moyens respectifs de mise sous pression 16 de la cartouche de démarrage 9 et de la cartouche principale 9',
- des moyens pour commander une mise en oeuvre des vannes 14 affectées respectivement à la cartouche de démarrage 9 et à la cartouche principale 9'.

## Revendications

1. Méthode d'épuration chimique de gaz d'échappement (6) circulant à l'intérieur d'une ligne d'échappement (2) équipant un moteur thermique (1) d'un véhicule automobile, la ligne d'échappement (2) étant équipée d'un filtre à particules (FAP) et d'un dispositif d'injection (8) d'ammoniac à l'intérieur de la ligne d'échappement (2), le dispositif d'injection (8) comprenant au moins une cartouche de démarrage (9) et au moins une cartouche principale (9'), la méthode d'épuration comprenant une étape de régulation (AG) de la cartouche principale (9') qui comporte un accroissement d'une pression (P) à l'intérieur de la cartouche principale (9') jusqu'à une pression de régulation (P_{regul}), **caractérisée en ce que** la mise en oeuvre de l'étape de régulation (AG) prend en compte une instruction de régénération (IN) du filtre à particules (FAP).

2. Méthode selon la revendication précédente, **caractérisée en ce que** la mise en oeuvre de l'étape de régulation (AG) prend en compte une estimation (E) d'une charge restante d'ammoniac à l'intérieur de la cartouche de démarrage (9).

3. Méthode selon les revendications 1 et 2, **caractérisée en ce que** l'étape de régulation (AG) de la cartouche principale (9') est mise en oeuvre si l'instruction de régénération (IN) du filtre à particules (FAP) est valide et l'estimation (E) d'une charge restante d'ammoniac à l'intérieur de la cartouche de démarrage (9) est supérieure à une estimation-seuil (Eₛₑᵤᵢₗ).

4. Méthode selon les revendications 1 et 2, **caractérisée en ce que** l'étape de régulation (AG) de la cartouche principale (9') est mise en oeuvre si l'instruction de régénération (IN) du filtre à particules (FAP) est invalide et l'estimation (E) d'une charge restante d'ammoniac à l'intérieur de la cartouche de démarrage (9) est inférieure à une estimation-seuil (Eₛₑᵤᵢₗ).

5. Méthode selon la revendication 4, **caractérisée en ce que** l'étape de régulation (AG) de la cartouche principale (9') est mise en oeuvre tant que l'estimation (E) d'une charge restante d'ammoniac à l'intérieur de la cartouche de démarrage (9) est inférieure à l'estimation-seuil (Eₛₑᵤᵢₗ).

6. Méthode selon la revendication 5, **caractérisée en ce que** l'étape de régulation (AG) de la cartouche principale (9') est suivie d'une étape de mise en pression principale (AC) de la cartouche principale (9') qui est portée à une pression-seuil (Pₛₑᵤᵢₗ) inférieure à la pression de régulation (P_{regul}).

7. Dispositif d'injection (8) d'ammoniac à l'intérieur de la ligne d'échappement (2) pour la mise en oeuvre d'une méthode selon l'une quelconque des revendications précédentes, **caractérisé en ce que** le dispositif d'injection (8) comprend un contrôleur (15) comportant des moyens pour prendre en compte une une validité de l'instruction de régénération (IN) du filtre à particules (FAP).

8. Dispositif d'injection (8) selon la revendication 7, **caractérisé en ce que** le contrôleur (15) comporte des moyens pour prendre en compte l'estimation (E) d'une charge restante d'ammoniac à l'intérieur de la cartouche de démarrage (9).

9. Dispositif d'injection (8) selon les revendications 7 et 8, **caractérisé en ce que** le contrôleur (15) comporte des moyens pour commander une mise en oeuvre de moyens respectifs de mise sous pression (16) de la cartouche de démarrage (9) et de la cartouche principale (9').

10. Dispositif d'injection (8) selon les revendications 7 et 8, **caractérisé en ce que** le contrôleur (15) comporte des moyens pour commander une mise en oeuvre de vannes (14) affectées respectivement à la cartouche de démarrage (9) et à la cartouche principale (9').

## Patentansprüche

1. Verfahren zur chemischen Reinigung von Abgasen (6), die im Inneren einer Auspuffleitung (2), die einen Verbrennungsmotor (1) eines Kraftfahrzeugs ausstattet, zirkulieren, wobei die Auspuffleitung (2) mit einem Partikelfilter (FAP) und einer Einspritzvorrichtung (8) von Ammoniak in das Innere der Auspuffleitung (2) versehen ist, wobei die Einspritzvorrichtung (8) mindestens eine Startpatrone (9) und mindestens eine Hauptpatrone (9') aufweist, wobei das Reinigungsverfahren einen Regelschritt (AG) der Hauptpatrone (9') aufweist, der eine Steigerung eines Drucks (P) im Inneren der Hauptpatrone (9') bis zu einem Regeldruck (P_{regul}) aufweist, **dadurch gekennzeichnet, dass** die Umsetzung des Regelschritts (AG) eine Regenerierungsanweisung (IN) des Partikelfilters (FAP) berücksichtigt.

2. Verfahren nach dem vorhergehenden Anspruch, **dadurch gekennzeichnet, dass** die Umsetzung des Regelschritts (AG) eine Schätzung (E) einer restlichen Ammoniakcharge im Inneren der Startpatrone (9) berücksichtigt.

3. Verfahren nach den Ansprüchen 1 und 2, **dadurch gekennzeichnet, dass** der Regelschritt (AG) der Hauptpatrone (9') umgesetzt wird, wenn die Regenerierungsanweisung (IN) des Partikelfilters (FAP) gültig ist und die Schätzung (E) einer restlichen Ammoniakcharge im Inneren der Startpatrone (9) höher ist als ein Schätzungsschwellenwert (Eₛₑᵤᵢₗ).

4. Verfahren nach den Ansprüchen 1 und 2, **dadurch gekennzeichnet, dass** der Regelschritt (AG) der Hauptpatrone (9') umgesetzt wird, wenn die Regenerierungsanweisung (IN) des Partikelfilters (FAP) ungültig ist und die Schätzung (E) einer restlichen Ammoniakcharge im Inneren der Startpatrone (9) niedriger ist als ein Schätzungsschwellenwert (Eₛₑᵤᵢₗ).

5. Verfahren nach Anspruch 4, **dadurch gekennzeichnet, dass** der Regelschritt (AG) der Hauptpatrone (9') umgesetzt wird, solange die Schätzung (E) einer restlichen Ammoniakcharge im Inneren der Startpatrone (9) niedriger ist als der Schätzungsschwellenwert (Eₛₑᵤᵢₗ).

6. Verfahren nach Anspruch 5, **dadurch gekennzeichnet, dass** auf den Regelschritt (AG) der Hauptpatrone (9') ein Druckanlegungshauptschritt (AC) der Hauptpatrone (9'), folgt, die auf einen Druckschwellenwert (Pₛₑᵤᵢₗ) gebracht wird, der niedriger ist als der Regeldruck (P_{regul}).

7. Vorrichtung (8) zum Einspritzen von Ammoniak in das Innere der Auspuffleitung (2) zum Umsetzen eines Verfahrens nach einem der vorhergehenden Ansprüche, **dadurch gekennzeichnet, dass** die Einspritzvorrichtung (8) einen Controller (15) aufweist, der Mittel aufweist, um eine Gültigkeit der Regenerierungsanweisung (IN) des Partikelfilters (FAP) zu berücksichtigen.

8. Einspritzvorrichtung (8) nach Anspruch 7, **dadurch gekennzeichnet, dass** der Controller (15) Mittel aufweist, um die Schätzung (E) einer restlichen Ammoniakcharge im Inneren der Startpatrone (9) zu berücksichtigen.

9. Einspritzvorrichtung nach den Ansprüchen 7 und 8, **dadurch gekennzeichnet, dass** der Controller (15) Mittel aufweist, um eine Umsetzung jeweiliger Druckbeaufschlagungsmittel (16) der Startpatrone (9) und der Hauptpatrone (9') zu befehlen.

10. Einspritzvorrichtung (8) nach den Ansprüchen 7 und 8, **dadurch gekennzeichnet, dass** der Controller (15) Mittel aufweist, um eine Umsetzung von Schiebern (14), die jeweils der Startpatrone (9) und der Hauptpatrone (9') zugewiesen sind, zu befehlen.

## Claims

1. A method for chemical purification of exhaust gas (6) circulating in the interior of an exhaust line (2) equipping a heat engine (1) of a motor vehicle, the exhaust line (2) being equipped with a particulate filter (FAP) and with an ammonia injection device (8) in the interior of the exhaust line (2), the injection device (8) including at least one starting cartridge (9) and at least one main cartridge (9'), the purification method including a regulation stage (AG) of the main cartridge (9') which comprises an increase of a pressure (P) in the interior of the main cartridge (9') up to a regulation pressure (P_{regul}), **characterized in that** the implementation of the regulation stage (AG) takes into account a regeneration instruction (IN) of the particulate filter (FAP).

2. The method according to the preceding claim, **characterized in that** the implementation of the regulation stage (AG) takes into account an estimation (E) of a remaining charge of ammonia in the interior of the starting cartridge (9).

3. The method according to claims 1 and 2, **characterized in that** the regulation stage (AG) of the main cartridge (9') is implemented if the regeneration instruction (IN) of the particulate filter (FAP) is valid and the estimation (E) of a remaining charge of ammonia in the interior of the starting cartridge (9) is greater than a threshold estimation (Eₛₑᵤᵢₗ).

4. The method according to claims 1 and 2, **characterized in that** the regulation stage (AG) of the main cartridge (9') is implemented if the regeneration instruction (IN) of the particulate filter (FAP) is invalid and the estimation (E) of a remaining charge of ammonia in the interior of the starting cartridge (9) is less than a threshold estimation (Eₛₑᵤᵢₗ).

5. The method according to claim 4, **characterized in that** the regulation stage (AG) of the main cartridge (9') is implemented while the estimation (E) of a remaining charge of ammonia in the interior of the starting cartridge (9) is less than the threshold estimation (Eₛₑᵤᵢₗ).

6. The method according to claim 5, **characterized in that** the regulation stage (AG) of the main cartridge (9') is followed by a main pressurization stage (AC) of the main cartridge (9') which is brought to a threshold pressure (Pₛₑᵤᵢₗ) lower than the regulation pressure (P_{regul}).

7. A device (8) for the injection of ammonia in the interior of the exhaust line (2) for the implementation of a method according to any one of the preceding claims, **characterized in that** the injection device (8) includes a controller (15) comprising means for taking into account a validity of the regeneration instruction (IN) of the particulate filter (FAP).

8. The injection device (8) according to claim 7, **characterized in that** the controller (15) comprises means for taking into account the estimation (E) of a remaining charge of ammonia in the interior of the starting cartridge (9).

9. The injection device (8) according to claims 7 and 8, **characterized in that** the controller (15) comprises means for commanding an implementation of respective means for pressurization (16) of the starting cartridge (9) and of the main cartridge (9').

10. The injection device (8) according to claims 7 and 8, **characterized in that** the controller (15) comprises means for commanding an implementation of valves (14) assigned respectively to the starting cartridge (9) and to the main cartridge (9').
